# EUROPEAN PATENT SPECIFICATION

(11) **EP 3 649 710 B1**
(45) Date of publication and mention of the grant of the patent: **12.08.2020**
(21) Application number: 19725678.7
(22) Date of filing: 16.05.2019
(51) Int. Cl.: H02B 1/38

(54) **ELECTRICAL CABINET WITH FRONT DOOR INTERLOCK**
SCHALTSCHRANK MIT FRONTTÜRVERRIEGELUNG
ARMOIRE ÉLECTRIQUE AVEC VERROUILLAGE DE LA PORTE AVANT

(30) Priority: 19.06.2018 US 201862686836 P
(43) Date of publication of application: 13.05.2020
(73) Proprietor: SOMIC Verpackungsmaschinen GmbH & Co. KG, 83123 Amerang (DE)
(72) Inventor: WINKLER, Markus Karl, 83064 Raubling (DE); LAH, Eric, 83123 Amerang (DE)
(74) Representative: Weickmann & Weickmann PartmbB
(86) International application number: PCT/EP2019/062657
(87) International publication number: WO 2019/242949

(56) References cited:
- GB-A- 680 165
- US-A1- 2013 009 524
- US-A1- 2013 256 102

## Description

The invention relates to a control and/or switch cabinet for a machine at least partially operated by electric power, for example a packaging machine, said control and/or switch cabinet comprising the features of the preamble part of claim 1.

In known control and/or switch cabinets of this type the main switch operating unit is mounted to the frame of the cabinet, which allows a rigid mechanical connection between the main switch operating unit and the main switch unit. Furthermore, the movable elements of the front door safety ensuring unit are integrated into the main switch operating unit and include an engagement element, e.g. a hook element, cooperating with an engagement counter-element, e.g. a pin element, fixedly mounted to the front door panel, said engagement element and said engagement counter-element being in door closing engagement, as long as the main switch operating unit is in a position corresponding to the power on position of the main switch unit.

When the main switch unit is transferred from its power on position to its power off position by moving a movable element of the main switch operating unit along a transfer path, the main switch unit actually has been transferred to its power off position, when the movable element has reached the end of a first section of the transfer path, while the engagement element and the engagement counter-element still are in door closing engagement with each other. Then, while the movable element is moved to the end of the transfer path, i.e. along a second section of the transfer path, the engagement element and the engagement counter-element are brought out of door closing engagement. Thus, it is ensured that the electric power supplied to the machine has been switched off, before the at least one front door may be opened for allowing access to the interior of the control and/or switching cabinet.

Moreover, when moving the movable element of the main switch operating unit towards from the end of the transfer path towards the first section of the transfer path, the movement of the movable element to the first section of the transfer path will only be allowed, if the engagement element and the engagement counter-element are able to enter into door closing engagement. Otherwise, i.e. if the engagement element and the engagement counter-element are not able to enter into door closing engagement, the movement of the movable element to the first section of the transfer path will be blocked. Thus, it is ensured that the electric power supplied to the machine may be switched on only, if the at least one front door has been closed.

Control and/or switch cabinets of this type have proven to be reliable. However, a major drawback of these control and/or switch cabinets resides in the fact that the portion of interior space of the cabinet located behind the frame section to which the main switch operating unit is mounted is difficult to access. Thus, in practice, either the usable interior space of the cabinet is reduced or the overall width of the cabinet has to be increased.

A control and/or switch cabinet having the features of the preamble of claim 1 is known from GB-A-680 165. With respect to further prior art, it is referred to UA-A-2013/0009524 and US-A-2013/0256102.

In view of the above, it is an object of the present invention to provide a control and/or switch cabinet of the generic type allowing using the entire interior space of the cabinet without increasing its overall width.

According to the present invention this object is solved by a control and/or switch cabinet according to claim 1.

In this case, the mechanical connection between the main switch operating unit and the main switch unit may be formed by a flexible mechanical connection, e.g. by a Bowden cable.

As in the prior art control and/or switch cabinet, the movable elements of the safety ensuring unit may be integrated into the main switch operating unit and may include an engagement element, e.g. a hook element, cooperating with an engagement counter-element, e.g. a pin element, said engagement element and said engagement counter-element being in door closing engagement, as long as the main switch operating unit is in a position corresponding to the power on position of the main switch unit. With respect to the operation of the main switch operating unit as well, reference is made to the afore-discussed prior art control and/or switch cabinet.

According to the invention, the control and/or switch cabinet includes two front doors, preferably two front doors, the left of which is hinged to the frame on its left side, while the right front door is hinged to the frame on its right side. In this case, the main switch operating unit may be mounted to a primary door of the two front doors, while the engagement counter-element may be fixedly mounted to a secondary door of the two front doors. In this way it is guaranteed that both front doors have to be closed, before the main switch unit can be transferred to its power on position, as only if the two front doors are closed the engagement element and the engagement counter-element may enter into engagement with each other allowing the main switch operating unit to be transferred into a position corresponding to the power on position of the main switch unit

Furthermore, according to the invention, the secondary front door has at least one projection, e.g. formed by a strip, protruding from an edge facing towards doors, engaging behind said corresponding edge of the primary door. As those skilled in the art are familiar with this type of construction of cooperating doors, this construction intuitively facilitates the correct sequence of operation steps, namely of first closing the secondary front door and only afterwards closing the primary front door.

Furthermore, according to the invention, the control and/or switch cabinet includes on its back side at least one back door, and the control and/or switch cabinet further comprises an exclusively mechanically operating back door safety ensuring unit supplementing the afore-discussed front door safety ensuring unit.

Advantageously, the back door safety ensuring unit and the front door safety ensuring unit cooperate with each other only via their respective cooperation with the opening and closing operation of the front doors and the at least one back door. In other words, the back door safety ensuring unit and the front door safety ensuring unit are free from any direct mechanical connection with each other.

Furthermore, according to the invention, the back door safety ensuring unit comprises a front rod allocated to and interacting with the at least one front door and a back rod allocated to and interacting with the at least one back door, said front rod and said back rod each being transferable between a respective front door open position and a respective front door closed position, said front rod and said back rod being commonly transferable between their front door open positions and their front door closed positions, e.g. by being connected via a connecting rod articulated to both rods, the front rod and the back rod. It is to be noted that the term "rod", in the context of the present invention refers to any type of elongate element which may extend in the width direction of the control and/or switch cabinet and mounted in a displaceable manner to the frame of the cabinet. In particular, the rod may have a filled profile or a hollow profile of any suitable shape, e.g. a rectangular profile, a square profile, an L-shaped profile, a C- or U-shaped profile, and the like.

Advantageously, the front rod and the back rod, and optionally the connecting rod, may be mounted underneath an upper frame panel of the cabinet.

For transferring the front rod and the back rod from their respective front door open positions to their respective front door closed position, a pushing element is mounted to the secondary front door, said pushing element cooperating with a pushed element mounted to the front rod. Furthermore, for transferring the front rod and the back rod from their respective front door closed positions to their respective front door open positions, a biasing element, e.g. a helical compression spring, a gas spring, a gravitation-based biasing element or the like, may be mounted to the frame of the cabinet and act on at least one of the front rod and the back rod, preferably the back rod. In this way it is ensured that the front rod and the back rod may not inadvertently be transferred to the front door closed position.

Furthermore, a stopper element stopping the front rod's and the back rod's movement under the action of the biasing element may be provided for defining the front door open position. A corresponding stopper element for defining the front door closed position is not required due to the pushed element being pushed by the pusher element against the action of the biasing element.

In order to allow the at least one back door to be opened only if the at least one front door has been opened before, a back door retaining element, e.g. a hook element, allocated to the back door or to at least one of the back doors, intended for cooperation with a back door retaining counter-element of the allocated back door, and transferable between a back door retaining position and a back door releasing position, may be mounted to the frame of the cabinet, said back door retaining element being biased, e.g. by gravitation, to the back door retaining position, and a retention release element may be mounted to the back rod, said retention release element being adapted to transfer said back door retaining element from its back door retaining position to its back door releasing position, when the back rod is transferred from its front door closed position to its front door open position. For example, the retention release element may have an oblique surface lifting the back door retaining element against gravitation from its back door retaining position to its back door releasing position, when the back rod is transferred from its front door closed position to its front door open position.

If the control and/or switch cabinet comprises two back doors, e.g. two back doors, the left of which is hinged to the frame on its left side, while the right front door is hinged to the frame on its right side, one of these two back doors being a secondary back door having at least one projection, e.g. formed by a strip, protruding from an edge facing towards a corresponding edge of the corresponding primary back door and, in a closed state of both back doors, engaging behind said corresponding edge of the primary door, a back door retaining element needs to be provided only for the primary back door, as the secondary back door, due to the at least one projection, may be opened only after the primary back door has been opened first.

In order to allow the at least one front door to be closed only if the back door has or all back doors have been closed before, for the back door or for each of the back doors, a back rod blocking element adapted to cooperate with a back rod blocking counter-element mounted to the back rod and transferable between a back rod blocking position, in which the back rod is hindered from being transferred from its front door open position to its front door closed position, and a back rod releasing position, in which the back rod is allowed to be transferred from its front door open position to its front door closed position, may be mounted to the frame of the cabinet, and a blocking release element may be mounted to the back door, said blocking release element being adapted to transfer said back rod blocking element from its back rod blocking position to its back rod releasing position.

Finally, it should be added that, for opening or closing the front door(s) and the back door(s), a corresponding door handle may be provided on the panel of the respective door. For example, a front door handle may be attached to the primary front door for engaging or disengaging, respectively, connection pins of the primary front door with the frame of the cabinet. Analogously, a back door handle may be attached to the primary back door.

The invention will be described in more detail referring to the attached drawings, in which
- Figure 1: shows a schematic view of a control and/or switch cabinet according to the present invention in its closed state; and
- Figure 2: shows a schematic view of the control and/or switch cabinet of Figure 1 in its open state.

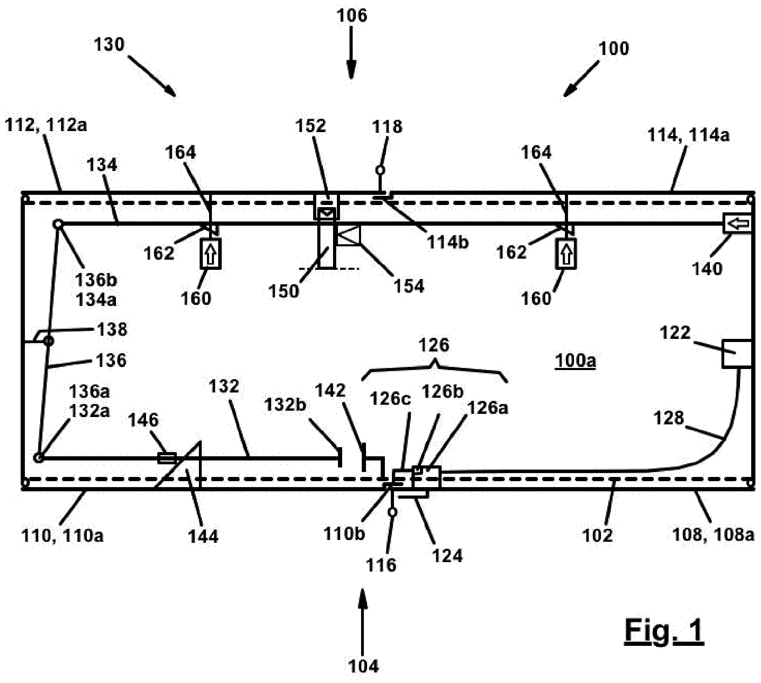

In Figure 1 a control and/or switch cabinet according to the present invention is generally denoted by 100. The control and/or switch cabinet 100 may be adapted to be used, for example, together with a machine (not shown) at least partially operated by electric power, preferably but not exclusively a packaging machine.

According to Figure 1, the control and/or switch cabinet 100 comprises a frame 102, a front side 104 and a back side 106, and a plurality of doors, namely a right front door 108, a left front door 110, a right back door 112 and a left back door 114. It should be noted that, in the context of the present invention, the term "right" and "left" are used as seen when standing on the respective front or back side of the cabinet 100 and facing towards to cabinet 100. Each of the doors 108, 110, 112, 114 further comprises a respective door panel 108a, 110a, 112a, 114a. The doors 108, 110, 112, 114 allow access to an interior space 100a of the cabinet 100.

As may be seen from Figure 1, the left front door 110 includes a strip 110b protruding from an edge facing towards a corresponding edge of the right front door 108 and, in a closed state of both front doors 108, 110, engaging behind the corresponding edge of the right front door 108. As a consequence, the left front door 110 may be opened only if the right front door 108 has been opened first. In this sense, the right front door 108 may be considered being a primary front door, while the left front door 110 may be considered being a secondary front door. As the left back door 114 comprises an analogous strip 114b, the right back door 112 may be considered being a primary back door, whereas the left back door 114 may be considered being a secondary back door. Furthermore, a front door handle 116 is attached to the primary front door 108 for engaging or disengaging, respectively, connection pins (not shown) of the primary front door 108 with the frame 102 of the cabinet 100. And an analogous back door handle 118 is attached to the primary back door 112.

The control and/or switch cabinet 100 further comprises a main switch device 120 including a main switch unit 122 transferable between a power on position in which electric power is supplied to the machine (not shown) and a power off position in which the machine is cut off from electric power, a manually operable main switch operating unit 124 operatively connected to power on position and the power off position, said main switch operating unit 124 being located at the front side 104 of the control and/or switch cabinet 100, and an exclusively mechanically operating front door safety ensuring unit 126 allowing opening the front doors 108, 110 only if the main switch unit 122 is in its power off position and allowing transferring the main switch unit 122 to its power on position only if the front doors 108, 110 are closed. According to the present invention, the main switch operating unit 124 is mounted on the door panel 108a of the primary front door 108.

It should be mentioned that the front door safety ensuring unit 126 as such is known in the prior art and comprises an actuation unit 126a actuated by the main switch operating unit 124, and an engagement element 126b, e.g. a hook (not shown in detail), of the main switch operating unit 124 cooperating with an engagement counter-element 126c, e.g. a pin, mounted to the secondary front door 110.

As may be seen from Figure 1, the main switch operating unit 124 and the main switch unit 122 are operatively connected to each other by a flexible mechanical connection 128, e.g. by a Bowden cable.

When the main switch unit 122 is transferred from its power on position to its power off position by moving the main switch operating unit 124 along a transfer path, the main switch unit 122 actually will have been transferred to its power off position, when the main switch operating unit 124 has reached the end of a first section of the transfer path, while the engagement element 126b and the engagement counter-element 126c still are in door closing engagement with each other. Then, while the main switch operating unit 124 is moved to the end of the transfer path, i.e. along a second section of the transfer path, the engagement element 126b and the engagement counter-element 126c are brought out of door closing engagement. Thus, it is ensured that the electric power supplied to the machine has been switched off, before the primary front door 108 may be opened for allowing access to the interior space 100a of the control and/or switching cabinet 100. And only after the primary front door 108 has been opened, the secondary front door 110 may be opened due to the strip 110b engaging behind the panel 108a of the primary front door 108.

In view of the safety of operating staff members, it is of course of essential importance, that the back doors 112, 114 are included in the safety concept of the control and/or switch cabinet 100. In particular, it has to be ensured that the back doors 112, 114 may not be opened, before the front doors 108, 110 have been opened. Furthermore, it has to be ensured that the front doors 108, 110 may be closed only if the back doors 112, 114 have been closed first.

For this purpose, the control and/or switch cabinet 100 further comprises an exclusively mechanically operating back door safety ensuring unit 130. In the following, the construction and the operation of this back door safety ensuring unit 130 will be described in more detail.

The back door safety ensuring unit 130 comprises a front rod 132 allocated to and interacting with the secondary front door 110 and a back rod 134 allocated to and interacting with both back doors 112, 114, and a connecting rod 136, the two ends 136a and 136b of which are articulated to corresponding ends 132a and 134a of the front rod 132 and the back rod 134, respectively. The connecting rod 136 is pivotably mounted to the frame 102 of the cabinet 100 via a support 138. And the front rod 132 and the back rod 134 are axially displaceably mounted to the frame 102 by guiding elements not shown for the sake of simplicity of the drawing.

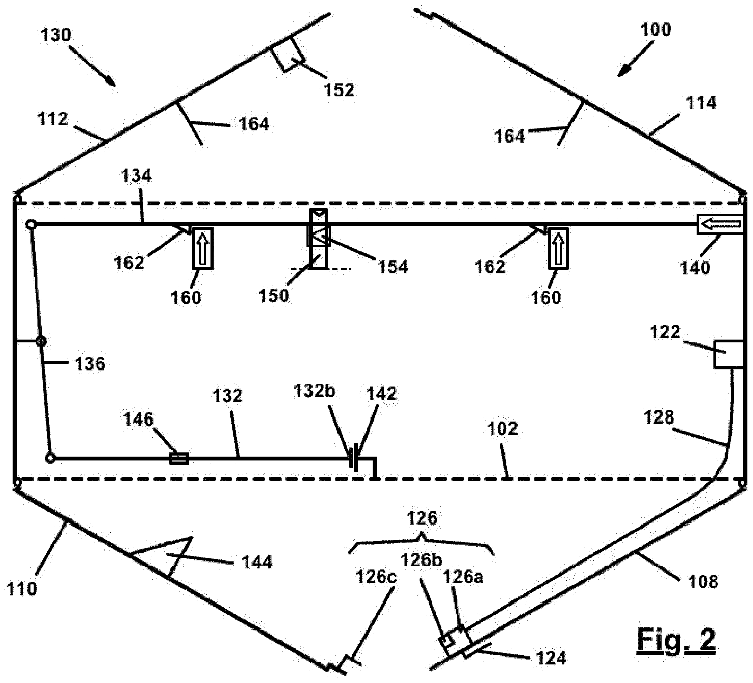

The back door safety ensuring unit 130 further comprises a biasing element 140, which may be formed e.g. by a helical compression spring. Said biasing element 140 may be mounted to the frame 102 of the cabinet 100 and act on the rod assembly 132-134-136, in order to transfer the same towards a front door open position shown in Figure 2, in which the free end 132b of the front rod 132 abuts against a stopper element 142 attached to the frame 102 of the cabinet 100.

The back door safety ensuring unit 130 further comprises a pushing element 144 attached to the secondary front door 110 and a pushed element 146 fixed to the front rod 132 and adapted to cooperate with the pushing element 144, in order to transfer the rod assembly 132-134-136 against the biasing force of the biasing element 140 towards a front door closed position shown in Figure 1.

The back door safety ensuring unit 130 further comprises a back door retaining element 150, e.g. a hook, allocated to the primary back door 112 and pivotably mounted to the frame 102 of the cabinet 100, as well as a back door retaining counter-element 152, e.g. a recess or a recess-carrying element, allocated, e.g. mounted, to the primary back door 112 and adapted to enter into door retaining engagement with the door retaining element 150. In particular, the door retaining element 150 may be biased by gravity towards a door retaining position, in which it engages with the back door retaining counter-element 152. The back door safety ensuring unit 130 further comprises a retention release element 154 mounted to the back rod 134, said release element 154 being adapted to transfer said back door retaining element 150 from its back door retaining position to a back door releasing position, when the rod assembly 132-134-136 is transferred from its front door closed position to its front door open position. In particular, the retention release element 154 may have an oblique surface engaging under the back door retaining element 150 and lifting same against gravity out of engagement with the back door retaining counter-element 152.

When all doors 108 to 114 are closed, the rod assembly 132-134-136 is in its front door closed position shown in Figure 1. Accordingly, the back door retaining element 150 and the back door retaining counter-element 152 are in door retaining engagement, as the retention release element 154 is out of engagement with the back door retaining element 150. Accordingly, the primary back door 112 may not be opened due to the engagement of the back door retaining element 150 and the back door retaining counter-element 152. Furthermore, the secondary back door 114 may not be opened due to the strip 114b engaging behind the panel 112a of the primary back door 112.

When the secondary front door 110 is being opened, the pusher element 144 releases the pushed element 146, such that the biasing element 140 transfers the rod assembly towards its front door open position. As a consequence, the retention release element 154 engages with the back door retaining element 150 and thus brings the back door retaining element 150 out of engagement with the back door retaining counter-element 152. Accordingly, first the primary back door 112 has to be opened and only then the secondary back door 114 may be opened.

The back door safety ensuring unit 130 further comprises for each of the back doors 112, 114 a back rod blocking element 160, e.g. pivotably, mounted to the frame 102 of the cabinet 100, adapted to cooperate with a back rod blocking counter-element 162 mounted to the back rod 134, and biased, e.g. by gravity, towards a back rod blocking position. When the back doors 112, 114 are closed, a blocking release element 164 mounted to each of the back doors 112, 114 holds the back rod blocking element 160 in a blocking release position.

When the secondary front door 110 is opened, the rod assembly 132-134-136 is transferred to its front door open position shown in Figure 2, in which the back rod blocking counter-element 162 is shifted to the side of the back rod blocking element 160. As soon as at least one of the back doors 112 and/or 114 is opened, the respective blocking release element 164 gets out of engagement with the corresponding back rod blocking element 160, which, as a consequence, is transferred to its back rod blocking position, in which it prevents by abutment with the back rod blocking counter-element 162 that the rod assembly 132-134-136 is transferred back to its front door closed position. In other word, the cooperation of the back rod blocking counter-element 162 and the back rod blocking element 160 in its back rod blocking position prevents the secondary back door 110 from being closed due to the cooperation of the pusher element 144 and the pushed element 146, and thus further the transfer of the main switch unit 122 into its power on position. In order to allow the closing of the front doors 108, 110, both back doors 112, 114 have to be closed, in order to transfer both back rod blocking elements 160 to their respective blocking release position, allowing the respective back rod blocking counter-elements 162 to pass by the back rod blocking elements 160, and as a consequence allowing the rod assembly 132-134-136 to be transferred back to its front door closed position. However, as long as the rod assembly 132-134-136 still is in its front door open position, the retention release element 154 holds the back door retaining element 150 out of engagement with the back door retaining counter-element 152.

When the secondary front door 110 is closed, the rod assembly 132-134-136 is transferred back to its front door closed position shifting the retention release element 154 to the side of the back door retaining element 150 allowing same to enter into door retaining engagement with the back door retaining counter-element 152. Thus, once the secondary front door 110 has been closed, the back doors 112, 114 may not be opened again.

It is to be emphasized that the back door safety ensuring unit 130 and the front door safety ensuring unit 126 are free from any direct mechanical connection with each other. Rather, the back door safety ensuring unit 130 and the front door safety ensuring unit 126 are adapted to cooperate with each other only via their respective cooperation with the opening and closing operation of the doors 108 to 114.

## Claims

1. A control and/or switch cabinet (100) for a machine at least partially operated by electric power, for example a packaging machine, said control and/or switch cabinet (100) comprising
• a frame (102),
• a front side (104) and a back side (106),
• two front doors (108, 110), a primary and a secondary door, the left of which (110) is hinged to the frame (102) on its left side, while the right front door (108) is hinged to the frame (102) on its right side, having respective front door panels (108a, 110a) for opening or closing a front opening of the frame (102) allowing access to an interior space (100a) of the cabinet (100),
• at least one back door (112, 114) on its back side (106),
• a main switch device (120) including
• a main switch unit (122) transferable between a power on position in which electric power is supplied to the machine and a power off position in which the machine is cut off from electric power,
• a manually operable main switch operating unit (124) operatively connected to the main switch unit (122) for transferring the main switch unit (122) between the power on position and the power off position, said main switch operating unit (124) being located at the front side of the control and/or switch cabinet (100), and being mounted on the front door panel (108a) of the primary door (108) of the two front doors,
• an exclusively mechanically operating front door safety ensuring unit (126) allowing opening the two front doors (108, 110) only if the main switch unit (122) is in its power off position and allowing transferring the main switch unit to its power on position only if the two front doors (108, 110) are closed, and
• an exclusively mechanically operating back door safety ensuring unit (130), allowing the at least one back door (112, 114) to be opened only if the two front doors (108, 110) have been opened before, said back door safety ensuring unit (130) comprising a front rod (132) allocated to and interacting with the secondary front door (110) of the two front doors (108, 110) and a back rod (1234) allocated to and interacting with the at least one back door (112, 114), said front rod (132) and said back rod (134) each being transferable between a respective front door open position and a respective front door closed position, said front rod (132) and said back rod (134) being transferable together between their front door open positions and their front door closed positions, e.g. by being connected via a connecting rod (136) articulated to both rods, the front rod (132) and the back rod (134).
**characterized in**
**that** the front door safety ensuring unit (126) comprises an engagement counter-element (126c) cooperating with said main switch operating unit (124), fixedly mounted to the secondary front door (110), said secondary front door (110) having at least one projection (110b), e.g. formed by a strip, protruding from an edge facing towards a corresponding edge of the primary door (108) and, in a closed state of both front doors (108, 110), engaging behind said corresponding edge of the primary door (108), and
**that** the front rod (132) and the back rod (134) are axially displaceably mounted to the frame (102) by guiding elements.

2. The control and/or switch cabinet of claim 1,
wherein the mechanical connection between the main switch operating unit (124) and the main switch unit (122) is formed by a flexible mechanical connection (128), e.g. by a Bowden cable.

3. The control and/or switch cabinet of claim 1 or 2,
wherein the back door safety ensuring unit (130) and the front door safety ensuring unit (126) are free from any direct mechanical connection with each other.

4. The control and/or switch cabinet of any of claims 1 to 3,
wherein the back door safety ensuring unit (130) and the front door safety ensuring unit (126) are adapted to cooperate with each other only via their respective cooperation with the opening and closing operation of the front doors (108, 110) and the at least one back door (112, 114).

5. The control and/or switch cabinet of any of claims 1 to 4,
wherein the front rod (132) and the back rod (134), and optionally the connecting rod (136), are mounted underneath an upper frame panel of the frame (102) of the control and/or switch cabinet (100).

6. The control and/or switch cabinet of any of claims 1 to 5,
wherein a pushing element (144) is mounted to the the secondary front door (110), said pushing element (144) cooperating with a pushed element (146) mounted to the front rod (132).

7. The control and/or switch cabinet of any of claims 1 to 6,
wherein a biasing element (140) is mounted to the frame (102) of the control and/or switch cabinet (100) and acts on at least one (134) of the front rod and the back rod.

8. The control and/or switch cabinet of any of claims 1 to 7,
wherein a back door retaining element (150)
allocated to the back door or to at least one (112) of the back doors,
intended for cooperation with a back door retaining counter-element (152) of the allocated back door (112), and
transferable between a back door retaining position and a back door releasing position,
is mounted to the frame (102) of the control and/or switch cabinet (100), said back door retaining element (150) being biased to the back door retaining position, and
wherein a retention release element (154) is mounted to the back rod (134), said retention release element (154) being adapted to transfer said back door retaining element (150) from its back door retaining position to its back door releasing position, when the back rod (134) is transferred from its front door closed position to its front door open position.

9. The control and/or switch cabinet of claim 8,
wherein the retention release element (154) has an oblique surface lifting the back door retaining element (150) against gravitation from its back door retaining position to its back door releasing position, when the back rod (134) is transferred from its front door closed position to its front door open position.

10. The control and/or switch cabinet of any of claims 1 to 9,
wherein, for the back door or for each of the back doors (112, 114), a back rod blocking element (160)
adapted to cooperate with a back rod blocking counter-element (162) mounted to the back rod (134) and
transferable between a back rod blocking position, in which the back rod (134) is hindered from being transferred from its front door open position to its front door closed position, and a back rod releasing position, in which the back rod (134) is allowed to be transferred from its front door open position to its front door closed position,
is mounted to the frame (102) of the control and/or switch cabinet (100), and
wherein a blocking release element (164) is mounted to the back door (112, 114), said blocking release element (164) being adapted to transfer said back rod blocking element (160) from its back rod blocking position to its back rod releasing position.

## Patentansprüche

1. Steuer- und/oder Schaltschrank (100) für eine zumindest teilweise durch elektrische Leistung betriebene Maschine, beispielsweise eine Verpackungsmaschine, wobei der Steuer- und/oder Schaltschrank (100) umfasst
• einen Rahmen (102),
• eine Vorderseite (104) und eine Rückseite (106),
• zwei vordere Türen (108, 110), eine primäre und eine sekundäre Tür, von denen die linke (110) an ihrer linken Seite an dem Rahmen (102) angelenkt ist, während die rechte vordere Tür (108) an ihrer rechten Seite an dem Rahmen (102) angelenkt ist, mit jeweiligen vorderen Türplatten (108a, 110a) zum Öffnen oder Schließen einer vorderen Öffnung des Rahmens (102), die den Zugang zu einem Innenraum (100a) des Schrankes (100) ermöglicht,
• mindestens eine hintere Tür (112, 114) auf seiner Rückseite (106),
• eine Hauptschaltervorrichtung (120) mit
• einer Hauptschaltereinheit (122), die zwischen einer Einschaltposition, in der die Maschine mit elektrischer Leistung versorgt wird, und einer Ausschaltposition, in der die Maschine von elektrischer Leistung getrennt ist, umschaltbar ist,
• einer manuell betätigbaren Hauptschalterbetätigungseinheit (124), die mit der Hauptschaltereinheit (122) betriebsmäßig verbunden ist, um die Hauptschaltereinheit (122) zwischen der Einschaltposition und der Ausschaltposition umzuschalten, wobei die Hauptschalterbetätigungseinheit (124) an der Vorderseite des Steuer- und/oder Schaltschranks (100) angeordnet und an der vorderen Türplatte (108a) der primären Tür (108) der beiden vorderen Türen montiert ist,
• eine ausschließlich mechanisch arbeitende Vordertür-Sicherheitssicherstellungseinheit (126), die das Öffnen der beiden vorderen Türen (108, 110) nur dann erlaubt, wenn sich die Hauptschaltereinheit (122) in ihrer Ausschaltstellung befindet, und die das Umschalten der Hauptschaltereinheit in ihre Einschaltstellung nur dann erlaubt, wenn die beiden vorderen Türen (108, 110) geschlossen sind, und
• eine ausschließlich mechanisch arbeitende Hintertür-Sicherheitssicherstellungseinheit (130), die das Öffnen der mindestens einen hinteren Tür (112, 114) nur dann erlaubt, wenn die beiden vorderen Türen (108, 110) zuvor geöffnet wurden, wobei die Hintertür-Sicherheitssicherstellungseinheit (130) eine vordere Stange (132) umfasst, die der sekundären vorderen Tür (110) der beiden vorderen Türen (108, 110) zugeordnet ist und mit dieser zusammenwirkt, und eine hintere Stange (134), die der mindestens einen hinteren Tür (112, 114) zugeordnet ist und mit dieser zusammenwirkt, wobei die vordere Stange (132) und die hintere Stange (134) jeweils zwischen einer jeweiligen Vordertür-Öffnungsposition und einer jeweiligen Vordertür-Schließposition überführbar sind, wobei die vordere Stange (132) und die hintere Stange (134) gemeinsam zwischen ihren VordertürÖffnungspositionen und ihren Vordertür-Schließpositionen überführbar sind, bspw. indem sie über eine Verbindungsstange (136) verbunden sind, die an beiden Stangen, der vorderen Stange (132) und der hinteren Stange (134), angelenkt ist.
**dadurch gekennzeichnet,**
**dass** die Vordertür-Sicherheitssicherstellungseinheit (126) ein Eingriffsgegenelement (126c) umfasst, das mit der Hauptschalter-Betätigungseinheit (124) zusammenwirkt und fest an der sekundären vorderen Tür (110) montiert ist, wobei die sekundäre vordere Tür (110) mindestens einen Vorsprung (110b) aufweist, der z.B. durch einen Streifen gebildet ist, der von einer Kante vorsteht, die zu einer entsprechenden Kante der primären Tür (108) hin weist, und in einem geschlossenen Zustand beider vorderen Türen (108, 110) die entsprechende Kante der primären Tür (108) hintergreift, und
**dass** die vordere Stange (132) und die hintere Stange (134) durch Führungselemente axial verschiebbar am Rahmen (102) montiert sind.

2. Steuer- und/oder Schaltschrank nach Anspruch 1,
wobei die mechanische Verbindung zwischen der Hauptschalterbetätigungseinheit (124) und der Hauptschaltereinheit (122) durch eine flexible mechanische Verbindung (128), z.B. durch einen Bowdenzug, gebildet ist.

3. Steuer- und/oder Schaltschrank nach Anspruch 1 oder 2,
wobei die Hintertür-Sicherheitssicherstellungseinheit (130) und die Vordertür-Sicherheitssicherstellungseinheit (126) frei von jeder direkten mechanischen Verbindung miteinander sind.

4. Steuer- und/oder Schaltschrank nach einem der Ansprüche 1 bis 3,
wobei die Hintertür-Sicherheitssicherstellungseinheit (130) und die Vordertür-Sicherheitssicherstellungseinheit (126) so ausgelegt sind, dass sie nur durch ihr jeweiliges Zusammenwirken mit dem Öffnungs- und Schließvorgang der vorderen Türen (108, 110) und der mindestens einen hinteren Tür (112, 114) miteinander zusammenwirken.

5. Steuer- und/oder Schaltschrank nach einem der Ansprüche 1 bis 4,
wobei die vordere Stange (132) und die hintere Stange (134), und optional die Verbindungsstange (136), unter einer oberen Rahmenplatte des Rahmens (102) des Steuer- und/oder Schaltschranks (100) montiert sind.

6. Steuer- und/oder Schaltschrank nach einem der Ansprüche 1 bis 5,
wobei ein Schubelement (144) an der sekundären vorderen Tür (110) montiert ist, wobei das Schubelement (144) mit einem an der vorderen Stange (132) montierten Schubelement (146) zusammenwirkt.

7. Der Steuer- und/oder Schaltschrank nach einem der Ansprüche 1 bis 6,
wobei ein Vorspannelement (140) am Rahmen (102) des Steuer-und/oder Schaltschranks (100) montiert ist und auf mindestens eine (134) der vorderen Stange und der hinteren Stange wirkt.

8. Steuer- und/oder Schaltschrank nach einem der Ansprüche 1 bis 7, wob
ei ein Hintertür-Rückhalteelement (150),
das der hinteren Tür oder mindestens einer (112) der hinteren Türen zugeordnet ist,
das zum Zusammenwirken mit einem Hintertür-Rückhaltegegenelement (152) der zugeordneten hinteren Tür (112) bestimmt ist, und
zwischen einer Hintertür-Rückhalteposition und einer Hintertür-Freigabeposition überführbar ist,
an dem Rahmen (102) des Steuer- und/oder Schaltschranks (100) montiert ist, wobei das Hintertür-Rückhalteelement (150) in die Hintertür-Rückhalteposition vorgespannt ist, und
wobei ein Rückhalte-Freigabeelement (154) an der hinteren Stange (134) angebracht ist, wobei das Rückhalte-Freigabeelement (154) dazu geeignet ist, das Hintertür-Rückhalteelement (150) aus seiner Hintertür-Rückhalteposition in seine Hintertür-Freigabeposition zu überführen, wenn die hintere Stange (134) aus ihrer Vordertür-Schließposition in ihre Vordertür-Offenposition überführt wird.

9. Steuer- und/oder Schaltschrank nach Anspruch 8,
wobei das Rückhalte-Freigabeelement (154) eine schräge Fläche aufweist, die das Hintertür-Rückhalteelement (150) gegen die Schwerkraft aus seiner Hintertür-Rückhalteposition in seine Hintertür-Freigabeposition anhebt, wenn die hintere Stange (134) aus ihrer Vordertür-Schließstellung in ihre Vordertür-Offenstellung überführt wird.

10. Steuer- und/oder Schaltschrank nach einem der Ansprüche 1 bis 9,
wobei für die hintere Tür oder für jede der hinteren Türen (112, 114) ein Blockierelement (160) für die hintere Stange,
das dazu ausgebildet ist, mit einem an der hinteren Stange (134) montierten Blockiergegenelement (162) für die hintere Stange zusammenzuwirken und
das zwischen einer Blockierposition für die hintere Stange, in der die hintere Stange (134) daran gehindert wird, von ihrer Vordertür-Öffnungsposition in ihre Vordertür-Schließposition überführt zu werden, und einer Freigabeposition für die hintere Stange, in der die hintere Stange (134) von ihrer Vordertür-Öffnungsposition in ihre Vordertür-Schließposition überführt werden kann, überführbar ist,
am Rahmen (102) des Steuer- und/oder Schaltschranks (100) montiert ist und
wobei ein Blockierfreigabeelement (164) an der hinteren Tür (112, 114) angebracht ist, wobei das Blockierfreigabeelement (164) dazu ausgebildet ist, das Blockierelement (160) für die hintere Stange aus seiner Blockierposition für die hintere Stange in seine Freigabeposition für die hintere Stange überzuführen.

## Revendications

1. Armoire de commande et/ou de commutation (100) pour une machine au moins partiellement actionnée par une puissance électrique, par exemple une machine de conditionnement, ladite armoire de commande et/ou de commutation (100) comprenant :
• un bâti (102),
• un côté avant (104) et un côté arrière (106),
• deux portes avant (108, 110), une porte principale et une porte secondaire, dont la gauche (110) est articulée sur le bâti (102) sur son côté gauche, alors que la porte avant droite (108) est articulée sur le bâti (102) sur son côté droit, comportant des panneaux de porte avant (108a, 110a) respectifs pour ouvrir ou fermer une ouverture avant du bâti (102) permettant l'accès à un espace intérieur (100a) de l'armoire (100),
• au moins une porte arrière (112, 114) sur son côté arrière (106),
• un dispositif de commutation principal (120) comprenant :
• une unité de commutateur principal (122) pouvant être commutée entre une position de fourniture de puissance dans laquelle la puissance électrique est fournie à la machine et une position de coupure de puissance dans laquelle la machine est déconnectée de la puissance électrique,
• une unité d'actionnement de commutateur principal (124) pouvant être actionnée manuellement connectée de manière fonctionnelle à l'unité de commutateur principal (122) pour commuter l'unité de commutateur principal (122) entre la position de fourniture de puissance et la position de coupure de puissance, ladite unité d'actionnement de commutateur principal (124) étant située du côté avant de l'armoire de commande et/ou de commutation (100), et étant montée sur le panneau de porte avant (108a) de la porte principale (108) des deux portes avant,
• une unité garantissant la sécurité des portes avant (126) fonctionnant exclusivement mécaniquement permettant l'ouverture des deux portes avant (108, 110) uniquement si l'unité de commutateur principal (122) est dans sa position de coupure de puissance et permettant la commutation de l'unité de commutateur principal vers sa position de fourniture de puissance uniquement si les deux portes avant (108, 110) sont fermées, et
• une unité garantissant la sécurité de la porte arrière (130) fonctionnant exclusivement mécaniquement, permettant l'ouverture de ladite au moins une porte arrière (112, 114) uniquement si les deux portes avant (108, 110) ont été ouvertes au préalable, ladite unité garantissant la sécurité de la porte arrière (130) comprenant une tige avant (132) attribuée à et interagissant avec la porte avant secondaire (110) des deux portes avant (108, 110) et une tige arrière (134) attribuée à et interagissant avec ladite au moins une porte arrière (112, 114), ladite tige avant (132) et ladite tige arrière (134) pouvant être déplacées chacune entre une position de porte avant ouverte respective et une position de porte avant fermée respective, ladite tige avant (132) et ladite tige arrière (134) pouvant être déplacées ensemble entre leurs positions de porte avant ouverte et leurs positions de porte avant fermée, par exemple en étant reliées par l'intermédiaire d'une tige de liaison (136) articulée avec les deux tiges, la tige avant (132) et la tige arrière (134),
**caractérisée en ce que**
l'unité garantissant la sécurité des portes avant (126) comprend un contre-élément d'engagement (126c) coopérant avec ladite unité d'actionnement de commutateur principal (124), monté fixement sur la porte avant secondaire (110), ladite porte avant secondaire (110) comportant au moins une protubérance (110b), par exemple formée par une bande, faisant saillie d'un bord orienté vers un bord correspondant de la porte principale (108) et, dans un état fermé des deux portes avant (108, 110), s'engageant derrière ledit bord correspondant de la porte principale (108), et
**en ce que** la tige avant (132) et la tige arrière (134) sont montées de manière à pouvoir être déplacées axialement sur le bâti (102) par des éléments de guidage.

2. Armoire de commande et/ou de commutation selon la revendication 1,
dans laquelle la liaison mécanique entre l'unité d'actionnement de commutateur principal (124) et l'unité de commutateur principal (122) est formée par une liaison mécanique souple (128), par exemple par un câble Bowden.

3. Armoire de commande et/ou de commutation selon la revendication 1 ou 2,
dans laquelle l'unité garantissant la sécurité de la porte arrière (130) et l'unité garantissant la sécurité des portes avant (126) sont exemptes de toute liaison mécanique directe entre elles.

4. Armoire de commande et/ou de commutation selon l'une quelconque des revendications 1 à 3,
dans laquelle l'unité garantissant la sécurité de la porte arrière (130) et l'unité garantissant la sécurité des portes avant (126) sont conçues pour coopérer l'une avec l'autre uniquement par l'intermédiaire de leur coopération respective avec l'opération d'ouverture et de fermeture des portes avant (108, 110) et de ladite au moins une porte arrière (112, 114).

5. Armoire de commande et/ou de commutation selon l'une quelconque des revendications 1 à 4,
dans laquelle la tige avant (132) et la tige arrière (134), et en option la tige de liaison (136), sont montées au-dessous d'un panneau de bâti supérieur du bâti (102) de l'armoire de commande et/ou de commutation (100).

6. Armoire de commande et/ou de commutation selon l'une quelconque des revendications 1 à 5,
dans laquelle un élément de poussée (144) est monté sur la porte avant secondaire (110), ledit élément de poussée (144) coopérant avec un élément poussé (146) monté sur la tige avant (132).

7. Armoire de commande et/ou de commutation selon l'une quelconque des revendications 1 à 6,
dans laquelle un élément de sollicitation (140) est monté sur le bâti (102) de l'armoire de commande et/ou de commutation (100) et agit sur au moins l'une (134) de la tige avant et de la tige arrière.

8. Armoire de commande et/ou de commutation selon l'une quelconque des revendications 1 à 7,
dans laquelle un élément de retenue de porte arrière (150)
attribué à la porte arrière ou à au moins l'une (112) des portes arrière,
destiné à coopérer avec un contre-élément de retenue de porte arrière (152) de la porte arrière (112) attribuée, et
pouvant être déplacé entre une position de retenue de porte arrière et une position de libération de porte arrière,
est monté sur le bâti (102) de l'armoire de commande et/ou de commutation (100), ledit élément de retenue de porte arrière (150) étant sollicité vers la position de retenue de porte arrière, et
dans laquelle un élément de libération de retenue (154) est monté sur la tige arrière (134), ledit élément de libération de retenue (154) étant conçu pour déplacer ledit élément de retenue de porte arrière (150) de sa position de retenue de porte arrière à sa position de libération de porte arrière, lorsque la tige arrière (134) est déplacée de sa position de porte avant fermée à sa position de porte avant ouverte.

9. Armoire de commande et/ou de commutation selon la revendication 8,
dans laquelle l'élément de libération de retenue (154) a une surface oblique soulevant l'élément de retenue de porte arrière (150) contre la gravitation de sa position de retenue de porte arrière à sa position de libération de porte arrière, lorsque la tige arrière (134) est déplacée de sa position de porte avant fermée à sa position de porte avant ouverte.

10. Armoire de commande et/ou de commutation selon l'une quelconque des revendications 1 à 9,
dans laquelle, pour la porte arrière ou pour chacune des portes arrière (112, 114), un élément de blocage de tige arrière (160)
conçu pour coopérer avec un contre-élément de blocage de tige arrière (162) monté sur la tige arrière (134) et
pouvant être déplacé entre une position de blocage de tige arrière, dans laquelle le déplacement de la tige arrière (134) de sa position de porte avant ouverte à sa position de porte avant fermée est empêché, et une position de libération de tige arrière, dans laquelle le déplacement de la tige arrière (134) de sa position de porte avant ouverte à sa position de porte avant fermée est autorisé,
est monté sur le bâti (102) de l'armoire de commande et/ou de commutation (100), et
dans laquelle un élément de libération de blocage (164) est monté sur la porte arrière (112, 114), ledit élément de libération de blocage (164) étant conçu pour déplacer ledit élément de blocage de tige arrière (160) de sa position de blocage de tige arrière à sa position de libération de tige arrière.
